# EUROPEAN PATENT SPECIFICATION

(11) **EP 1 367 330 B1**
(45) Date of publication and mention of the grant of the patent: **07.10.2009**
(21) Application number: 03010774.2
(22) Date of filing: 14.05.2003
(51) Int. Cl.: F24B 5/02, F24B 1/22

(54) **Indirect-flame heat-reflection wood oven**
Mit Wärmereflexion indirekt beheizter Ofen
Four à chauffage indirect et à réflexion thermique

(30) Priority: 14.05.2002 IT RN20020029
(43) Date of publication of application: 03.12.2003
(73) Proprietor: Tafer S.r.l., 47835 Saludecio (RN) (IT)
(72) Inventor: Carboni, Dino, 47843 Misano (RN) (IT)
(74) Representative: Provvisionato, Paolo

(56) References cited:
- DE-C- 264 369
- FR-A- 1 289 979
- FR-A- 2 528 153
- FR-A- 2 554 215

## Description

Traditionally pizzerias and restaurants specialised in the preparation of pizzas are equipped with wood ovens. In order to meet customers' orders, avoiding excessively long waits, but still being able to serve many people at the same time, these wood ovens must be able to operate efficiently in a continuous manner.

A first distinction may be made between direct-flame wood ovens and indirect-flame wood ovens. In the case of the former, the cooking chamber also houses the burning wood, which is usually separated by means of a small dividing wall from the space available for cooking the food.

The fire directly heats the vault of the oven and the atmosphere inside it, while the reflected rays strike the top surface of the food placed on the cooking surface as well as the cooking surface itself. The latter is made of refractory material and acts in the manner of a heat accumulator in the sense that it stores the thermal energy of the reflected rays which strike it and releases it to the bottom surface of the food placed thereon. As a result, direct-flame ovens are lit a long time before cooking of the food starts in order to give the surface time to heat up adequately; and in any case effective cooking of the bottom surface of the food is obtained only for a short period of time since the surface cools rapidly.

In order to use ovens of this type correctly it would be necessary to suspend periodically cooking of the food in order to prepare the surface again, so much so that certain premises use only half the space inside the oven at a time or have two ovens which they use alternately.

In addition to this drawback, in the case of direct-flame ovens, any free-flying particles fall on the food, contaminating it and increasing its toxicity.

As shown in FR-A-2528153, in the case of indirect-flame ovens, which are less common, the cooking surface is heated directly from underneath: the cooking chamber has a single stainless-steel vault-shaped wall which is fairly high and has a cavity passing through it and is heated by the fumes produced by the fire. The main drawback of this solution consists in the fact that the heat is distributed randomly inside the cavity and very non-uniform cooking of various food items present simultaneously inside the cooking chamber may occur.

Moreover, the cavity is made using materials having good reflective, but not radiating, properties and therefore a relatively small fraction of the thermal energy which passes through the cavity is transmitted into the cooking chamber.

Indirect-flame ovens are normally equipped with a hatch for separating the inside from the outside and preventing heat dispersion during cooking. This solution is fairly inconvenient when it is required to bake pizzas: they are introduced in large quantities inside large-size cooking chambers by means of a pole with a long handle; the presence of a hatch would mean that it would have to be continuously moved, so that usually it is attempted to avoid the problem of heat dispersion by providing oven openings which are not equipped with hatches, but have dimensions which are as small as possible.

The object of the present invention is therefore that of eliminating the drawbacks mentioned above. The invention, as characterized by the claims, achieves the object by means of an indirect-flame wood oven in which the cooking chamber houses a plurality of radiating pipes which are arched in the manner of a vault and on the outside of which a reflecting wall is situated, said wall also concentrating the heat generated at the rear of the pipes onto the cooking surface.

The main advantage obtained by means of the invention consists essentially in the fact that the cooking surface thus heated ensures continuously over time proper baking of the bottom surface of the pizzas or other food.

This enables the whole internal surface of the oven to be used continuously, greatly increasing the cooking capacity.

Moreover, the good radiating capacity of the materials used and the dimensions of the pipes ensure uniform cooking of the food present inside the oven.

The high temperature inside the pipes also allows combustion of a high fraction of the uncombusted residue produced by the fire, resulting in an improved quality, in environmental terms, of the fumes emitted from the chimney.

A further advantage consists in the fact the excess heat produced inside the cooking chamber and not used for cooking the food may be drawn off, using an air recirculating system, so that it can then be used in various ways such as, for example, for heating premises or for heating water.

The structure of the component parts of the oven has been designed so as to make them replaceable with the maximum rapidity.

Finally, in the region of the entry opening a device is fitted so as to ensure an effective heat barrier between the inside and the outside of the oven without using any type of hatch.

Further advantages and characteristic features of the invention will appear more clearly from the detailed description which follows, with reference to the accompanying drawings which show a non-limiting example of embodiment thereof in which:

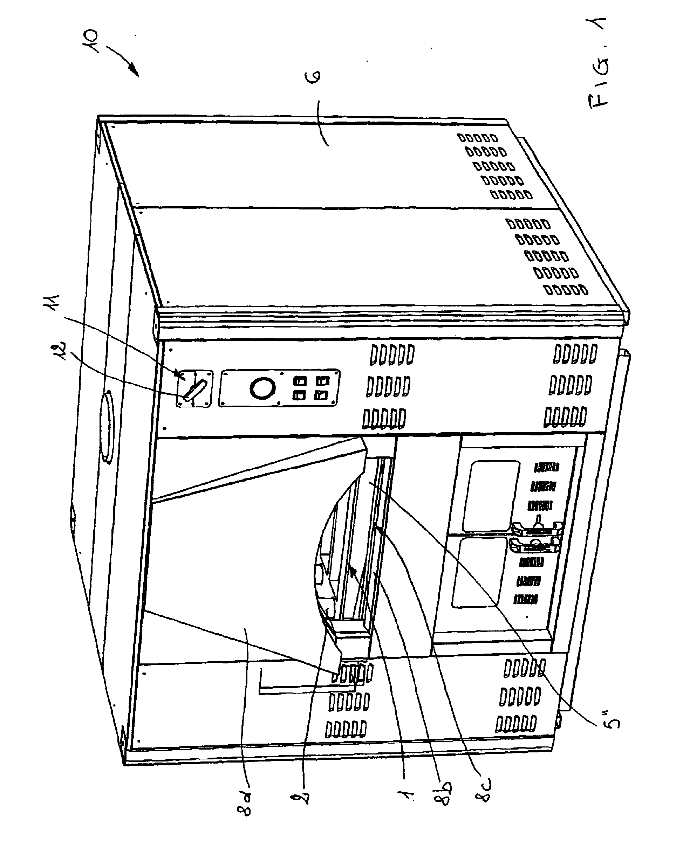

- Figure 1 shows a front perspective view of the invention, with some parts removed so that other parts can be seen more clearly;
- Figures 2 and 3 show a side view and a rear view respectively of the invention;
- Figure 4 shows the invention along the cross-section IV-IV according to Figure 3;
- Figure 5 shows the invention along the cross-section V-V according to Figure 2;
- Figure 6 shows the invention along the cross-section VI-VI according to Figure 3;
- Figures 7, 8, 9 and 10 show, respectively, a perspective view, top plan view, front view and side view of a detail of the invention;

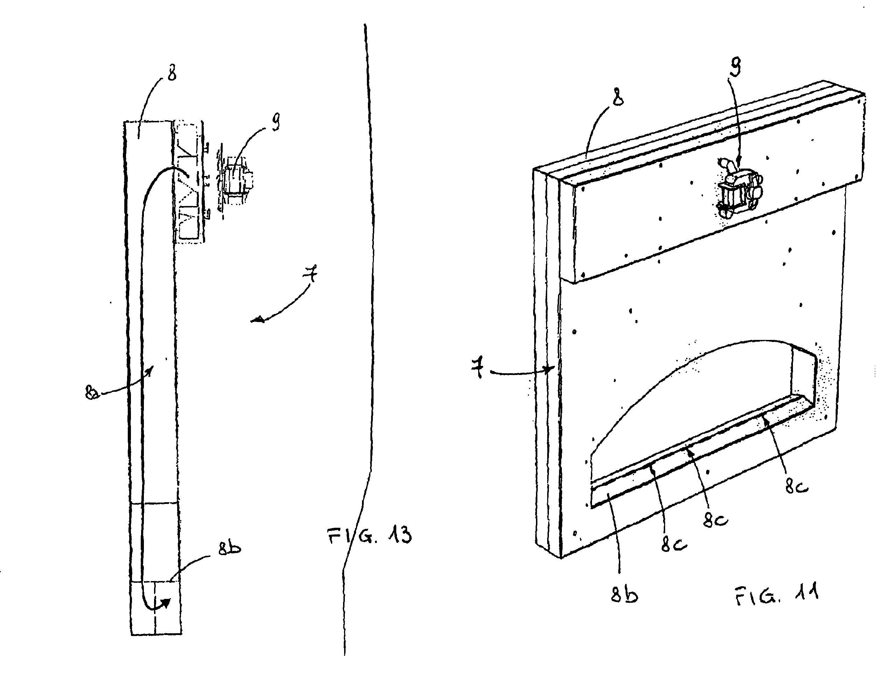

- Figure 11 shows a perspective view of a further detail of the invention;
- Figures 12 and 13 show respectively a front and side cross-sectional view of the detail according to Figure 11;
- Figure 14 shows a rear perspective view of the invention, with some parts removed so that other parts may be seen more clearly;
- Figure 15 shows the invention along the cross-section XV-XV according to Figure 14, with some parts removed so that other parts may be seen more clearly.

As can be seen from the Figures, the invention relates to an indirect-flame heat-reflecting wood oven comprising, as its main parts, a metal casing (6), a cooking chamber (1) and a combustion chamber (3).

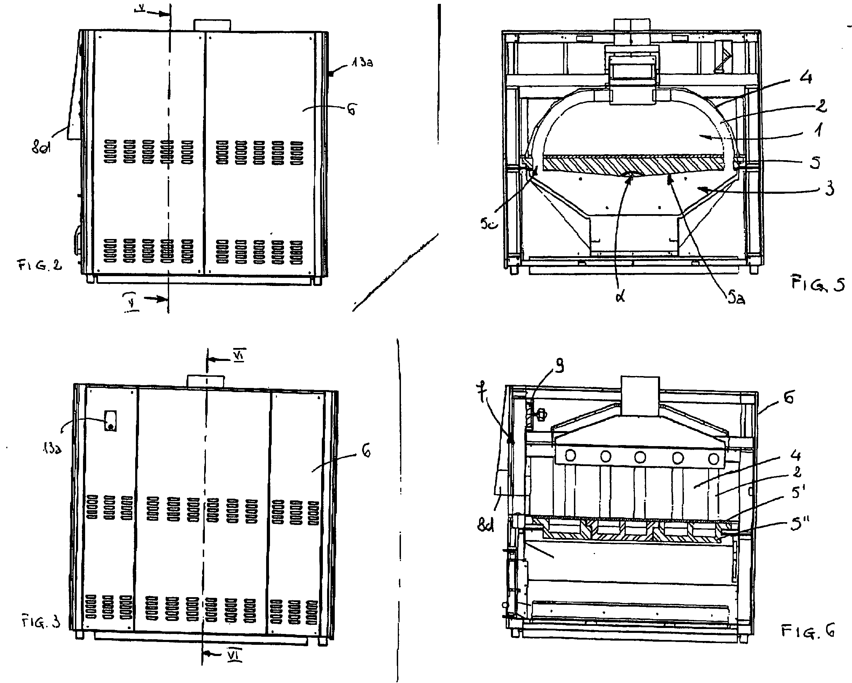

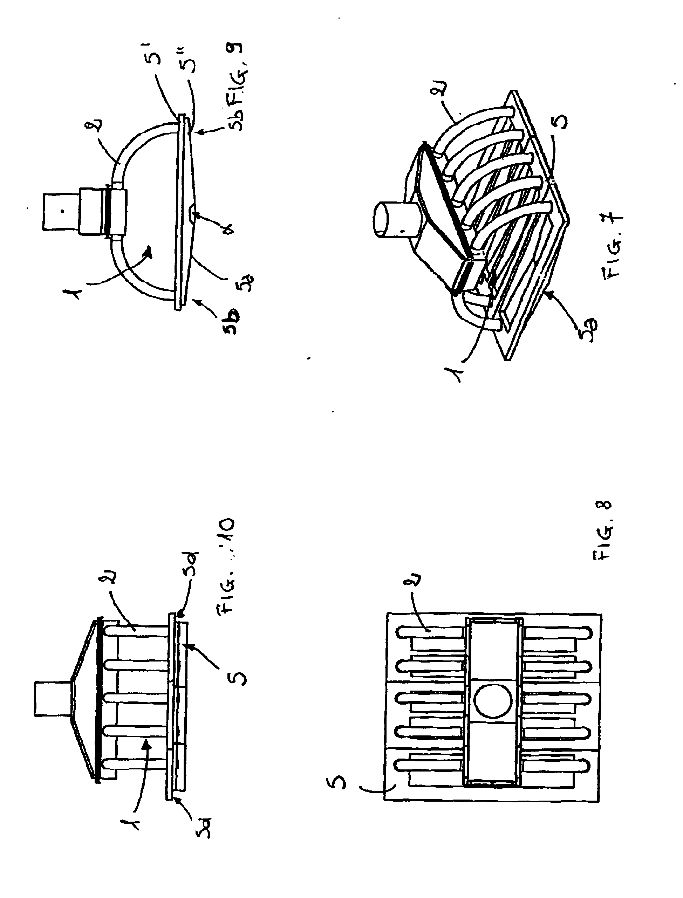

The cooking chamber (1), which can be seen in Figures 5 to 10, is heated, not only by the heat produced by the combustion chamber (3), but also by a plurality of pipes (2) which are arched in the manner of a vault and through which hot gases supplied from the combustion chamber (3) pass. A reflecting wall (4) is situated on the outside of the pipes (2), but still inside the cooking chamber (1).

The cooking chamber (1) is closed at the bottom by a cooking surface (5) which is made of refractory material and has a base (5a) where the bottom surface, facing the combustion chamber (3), is not flat in such a way as to direct the fire towards its ends (5b).

In this way, the cooking surface (5), in addition to being heated from below, receives the heat emitted by the pipes (2) which are made of a material having optimum irradiating properties, such as, for example, an aluminium and silicon alloy, as well as the heat reflected by the wall (4) behind the pipes (2) which is preferably made of stainless steel.

The dimensions of the pipes (2) are designed such that the supply of heat produced inside the combustion chamber (3) is equally distributed between them so as to cook uniformly the food inside the cooking chamber (1). Inside the pipes (2), temperatures of between 700 and 800°C are maintained, so that the greatest possible part of uncombusted residue generated by the combustion chamber (3) is burned.

The cooking surface (5) in reality comprises two components (5',5''), a first upper component (5') of which, in accordance with the current hygiene and sanitary regulations, is made of refractory material for alimentary use, and a second bottom component (5'') of which is made of pressed refractory cement instead of metal, as nowadays is normally the case. The use of this second component (5'') is significantly advantageous compared to the use of metal, since it is not affected by high temperatures and therefore does not buckle. Moreover, it retains the heat in a more efficient manner and for longer.

The base (5a) of the cooking surface (5) has, on its bottom surface facing the combustion chamber (3), an angle (α) of convergence not less than 140°, and preferably between 150° and 170°.

Moreover, in the vicinity of its ends (5b), it is provided with holes (5c) for engagement of the arched pipes (2). It also has shaped edges (5d) for favouring direct resting thereof on the metal casing (6) of the oven (10) so as to facilitate replacement thereof and compensate for relative expansion.

Another particular feature of the oven (10) in question is that it comprises a device (7) for preventing heat dispersion at the entry opening. This device (7), the usefulness of which is fully exploited here, would moreover be utilisable also in ovens of different design.

It comprises at least means (8,9) for creating a forced circulation of air at the entry opening of the oven (10). In the example shown, said means consist of an at least partially hollow front element (8), inside which a circuit for the air is created, and a fan (9) which is housed at the top of the front element (8) and is able to draw air from the bottom and push it towards at least a hollow part (8a) of the front element (8). The latter comprises, moreover, in the region of the entry opening of the oven (10), a small wall (8b) with slits (8c) and a hollow hood (8d) so as to allow constant movement of air in this zone.

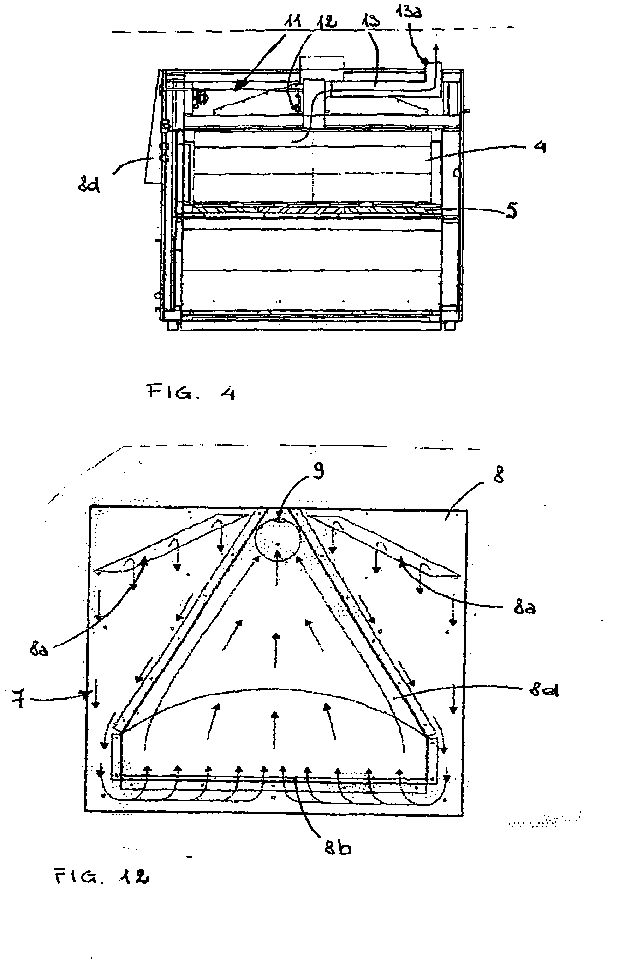

Figure 4 shows a second device (11) which allows the expulsion of the excess cooking fumes.

Its presence in fact gives rise to two significant advantages dependent upon the time for which this device (11) remains operational. In fact, if it operates for short periods, it reduces the environmental pollution in the premises, whereas if it remains in operation for longer periods, it ensures lowering of the temperature inside the oven.

The device (11) for expelling the excess cooking vapours comprises at least one valve (12), a hood (8d) and a discharge duct (13), the vent (13a) of which is located on the top side of the oven (10).

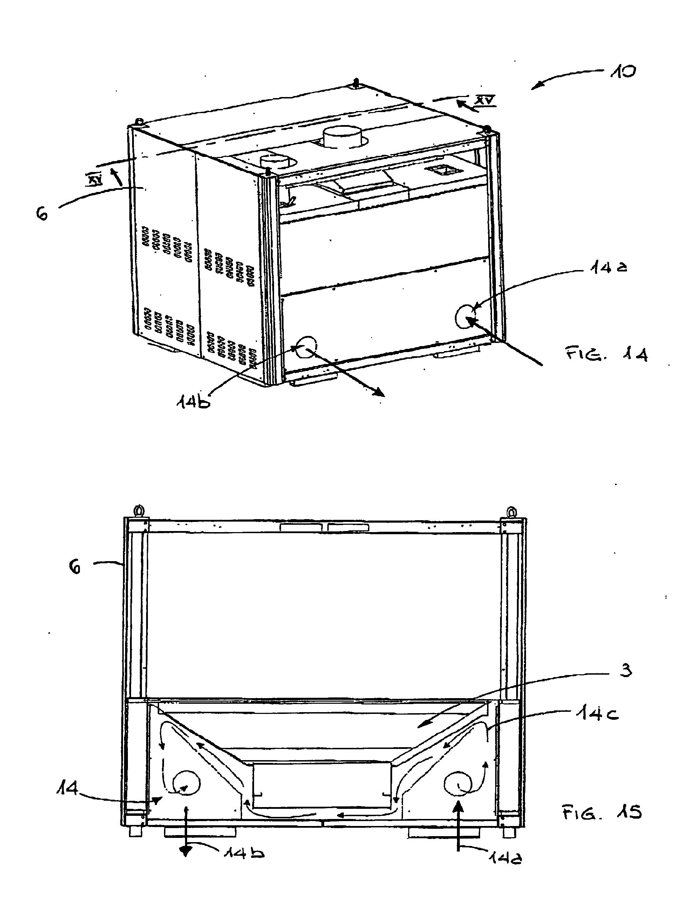

At the rear of the oven (10), on the other hand, a device (14) for using the excessive heat produced inside the combustion chamber (3) and not used for cooking the food can be installed. Said device is shown in Figures 14 and 15; in Figure 15, which is similar to Figure 5, the internal components of the cooking chamber (1) are not shown for the sake of convenience.

This device (14) comprises an inlet (14a) for the cold air and an outlet (14b) for the hot air and, between them, a path (14c) for the air which passes over the bottom of the combustion chamber (3), removing heat therefrom.

## Claims

1. Indirect-flame heat-reflecting wood oven, comprising a metal casing (6), a cooking chamber (1) and a combustion chamber (3), **characterized in that** the cooking chamber (1) is heated by a plurality of pipes (2) arched in the manner of a vault and through which hot gases from the combustion chamber (3) pass.

2. Wood oven according to Claim 1, **characterized in that** a reflecting wall (4) is situated on the outside of the pipes (2), but inside the cooking chamber (1) and is able to direct also the heat emitted from the rear of the pipes inside the cooking chamber (1).

3. Wood oven according to Claim 1 or 2, **characterized in that** the pipes (2) have a constant throughput so as to cook in a uniform manner the food inside the cooking chamber (1).

4. Wood oven according to Claim 1 or 2 or 3, **characterized in that** temperatures of between 700 and 800°C are maintained inside the pipes (2) so as to burn the uncombusted residue produced by the combustion chamber (3).

5. Wood oven according to one of the preceding claims, **characterized in that** it comprises a cooking surface (5) made of refractory material with a base (5a) which is not flat in such a way as to direct the fire towards its ends (5b).

6. Wood oven according to Claim 5, **characterized in that** the base (5a) of the cooking surface (5) has an angle (α) of convergence which is not less than 140°.

7. Wood oven according to Claim 5 or 6, **characterized in that** the cooking surface (5) has, in the vicinity of its ends (5b), holes (5c) for engagement of the arched pipes (2).

8. Wood oven according to Claim 5, **characterized in that** the cooking surface (5) comprises shaped edges (5d) for favouring direct resting thereof on the metal casing (6) of the oven (10), so as to facilitate replacement thereof and compensate for relative expansion.

9. Wood oven according to Claim 5, **characterized in that** the cooking surface (5) comprises two components (5'_{,}5_{'}'), a first upper component (5') of which is made of refractory material for alimentary use and a second bottom component (5") of which is made of pressed refractory material.

10. Wood oven according to one of the preceding claims, **characterized in that** it comprises a device (7) for preventing heat dispersion at the entry opening.

11. Wood oven according to Claim 10, **characterized in that** said device (7) comprises at least means (8,9) for creating a forced circulation of the air at the entry opening of the oven (10).

12. Wood oven according to Claim 11, **characterized in that** said means (8,9) comprise at least one partially hollow front element (8), inside which a circuit for the air is created, and a fan (9), which is housed at the top of the front element (8) and is able to draw air from the bottom and push it towards at least a hollow part (8a) of the front element (8).

13. Wood oven according to Claim 12, **characterized in that** the front element (8) comprises, in the region of the entry opening of the oven (10), a small wall (8b) with slits (8c) and a hollow hood (8d) so as to sallow constant movement of air in this zone.

14. Wood oven according to one of the preceding claims, **characterized in that** it comprises a second device (11) for expelling the excess cooking vapours.

15. wood oven according to Claim 14, **characterized in that** the device (11) for expelling the excess cooking vapours comprises at least one valve (12), a suction hood (8d) and at a discharge duct (13) provided with a vent (13a).

16. Wood oven according to one of the preceding claims, **characterized in that** it comprises a device (14) for recycling the heat produced inside the combustion chamber (3) which is not used for cooking food.

17. Wood oven according to Claim 16, **characterized in that** the device (14) for recycling the heat comprises an inlet (14a) for the ambient air, an outlet (14 b) for the heated air and a path (14c) which is situated between the inlet (14a) and the outlet (14b) and passes over the combustion chamber (3), removing heat therefrom.

## Patentansprüche

1. Ein hitzereflektierender Holzofen mit indirekter Beheizung, der Folgendes umfasst: ein Metallgehäuse (6), einen Garraum (1) und eine Verbrennungskammer (3), **gekennzeichnet dadurch, dass** der Garraum (1) durch eine Mehrzahl von Rohren (2) beheizt wird, die eine gebogene Form in der Art eines Gewölbes haben und durch die heiße Gase aus der Verbrennungskammer (3) strömen.

2. Holzofen nach Patentanspruch 1, **gekennzeichnet dadurch, dass** sich an der Außenseite der Rohre (2), aber im Inneren des Garraums (1) eine reflektierende Wand (4) befindet, die dazu imstande ist, auch die Hitze, die von der Rückseite der Rohre ausgestrahlt wird, in den Garraum (1) zu leiten.

3. Holzofen nach den Patentansprüchen 1 oder 2, **gekennzeichnet dadurch, dass** die Rohre (2) einen konstanten Durchsatz haben, sodass die Nahrung im Garraum (1) gleichmäßig gegart wird.

4. Holzofen nach den Patentansprüchen 1, 2 oder 3, **gekennzeichnet dadurch, dass** im Inneren der Rohre (2) Temperaturen zwischen 700° und 800° C beibehalten werden, sodass die unverbrannten Rückstände, die durch die Verbrennungskammer (3) erzeugt werden, verbrannt werden.

5. Holzofen nach einem der vorherigen Patentansprüche, **gekennzeichnet dadurch, dass** er eine Garfläche (5) aus feuerfestem Material umfasst, deren Basis (5a) nicht flach ist, sodass das Feuer zu ihren Enden (5b) geleitet wird.

6. Holzofen nach Patentanspruch 5, **gekennzeichnet dadurch, dass** die Basis (5a) der Garfläche (5) einen Konvergenzwinkel (α) aufweist, der nicht weniger als 140° beträgt.

7. Holzofen nach den Patentansprüchen 5 oder 6, **gekennzeichnet dadurch, dass** die Garfläche (5) in der Nähe ihrer Enden (5b) Öffnungen (5c) zur Aufnahme der gebogenen Rohre (2) aufweist.

8. Holzofen nach Patentanspruch 5, **gekennzeichnet dadurch, dass** die Garfläche (5) Ränder mit einer besonderen Form (5d) aufweist, damit sie besser und direkt auf dem Metallgehäuse (6) des Ofens (10) aufliegt, **dadurch** einfacher ausgewechselt werden kann und die entsprechende Ausdehnung ausgeglichen wird.

9. Holzofen nach Patentanspruch 5, **gekennzeichnet dadurch, dass** die Garfläche (5) zwei Komponenten (5', 5") umfasst, eine erste, obere Komponente (5'), die aus feuerfestem, lebensmittelechten Material hergestellt ist, und eine zweite, untere Komponente (5"), die aus gepresstem feuerfesten Material ist.

10. Holzofen nach einem der vorherigen Patentansprüche, **gekennzeichnet dadurch, dass** er eine Vorrichtung (7) zur Vorbeugung von wärmeverlusten an der Einführöffnung umfasst.

11. Holzofen nach Patentanspruch 10, **gekennzeichnet dadurch, dass** besagte Vorrichtung (7) zumindest Mittel (8, 9) zur Erzeugung einer forcierten Luftumwälzung an der Einführöffnung des Ofens (10) umfasst.

12. Holzofen, nach Patentanspruch 11, **gekennzeichnet dadurch, dass** besagte Mittel (8, 9) mindestens ein teilweise hohles Frontelement (8), in dem ein Kreislauf für die Luft erzeugt wird, und ein Gebläse (9), das am oberen Ende des Frontelements (8) angebracht ist und das dazu imstande ist, Luft vom Boden anzuziehen und in Richtung mindestens eines hohlen Teils (8a) des Frontelements (8) zu drücken, umfassen.

13. Holzofen nach Patentanspruch 12, **gekennzeichnet dadurch, dass** das Frontelement (8) im Bereich der Einführöffnung des Ofens (10) eine kleine Wand (8b) mit Schlitzen (8c) und eine hohle Haube (8d) umfasst, sodass die ständige Bewegung der Luft in diesem Bereich ermöglicht wird.

14. Holzofen nach einem der vorherigen Patentansprüche, **gekennzeichnet dadurch, dass** er eine zweite Vorrichtung (11) zum Ausstoß der überschüssigen Garungsdämpfe umfasst.

15. Holzofen nach Patentanspruch 14, **gekennzeichnet dadurch, dass** die Vorrichtung (11) zum Ausstoß der überschüssigen Garungsdämpfe mindestens ein Ventil (12), eine Abzughaube (8d) und einen mit einer Entlüftung (13a) ausgestatteten Abzugkanal (13) umfasst.

16. Holzofen nach einem der vorherigen Patentansprüche, **gekennzeichnet dadurch, dass** er eine Vorrichtung (14) zur Rückgewinnung der in der Verbrennungskammer (3) erzeugten Hitze, die nicht zum Garen der Nahrung verwendet wird, umfasst.

17. Holzofen nach Patentanspruch 16, **gekennzeichnet dadurch, dass** die Vorrichtung (14) zur Rückgewinnung der Hitze einen Einlass (14a) für die Umgebungsluft, einen Auslass (14b) für die erhitzte Luft und einen Pfad (14c) umfasst, der sich zwischen dem Einlass (14a) und dem Auslass (14b) befindet und über der Verbrennungskammer (3) verläuft, wobei er die Hitze daraus entfernt.

## Revendications

1. Four à bois à chauffe indirecte et à réflexion thermique, comprenant une carcasse (6) métallique, une chambre de cuisson (1) et une chambre de combustion (3), **caractérisé en ce que** la chambre de cuisson (1) est chauffée par une pluralité de tubes (2) arqués en voûte et dans lesquels passent les gaz chauds provenant de la chambre de combustion (3).

2. Four à bois selon la revendication 1, **caractérisé en ce qu'**une paroi réfléchissante (4) est située à l'extérieur des tubes (2), mais à l'intérieur de la chambre de cuisson (1), et sert à diriger également la chaleur émise par la partie arrière des tubes à l'intérieur de la chambre de cuisson (1).

3. Four à bois selon la revendication 1 ou 2, **caractérisé en ce que** les tubes (2) ont un débit constant de manière à cuire de façon unciforme les aliments situés dans la chambre de cuisson (1).

4. Four à bois selon la revendication 1 ou 2 ou 3, **caractérisé en ce que** des températures comprises entre 700 et 800°C sont maintenues à l'intérieur des tubes (2) de manière à brûler les résidus imbrûlés produits par la chambre de combustion (3).

5. Four à bois selon une des revendications précédentes, **caractérisé en ce qu'**il comprend une surface de cuisson (5) réalisée dans un matériau réfractaire et dotée d'un fond (5a) qui n'est pas plat de manière à diriger la chaleur vers ses extrémités (5b).

6. Four à bois selon la revendication 5, **caractérisé en ce que** le fond (5a) de la surface de cuisson (5) a un angle (α) de convergence qui n'est pas inférieur à 140°.

7. Four à bois selon la revendication 5 ou 6, **caractérisé en ce que** la surface de cuisson (5) présente, à proximité de ses extrémités (5b), des trous (5c) pour l'assujettissement des tubes (2) arqués.

8. Four à bois selon la revendication 5, **caractérisé en ce que** la surface de cuisson (5) comprend des bords profilés (5d) destinés à en favoriser l'appui direct sur la carcasse (6) métallique du four (10), de manière à en faciliter le remplacement et à en compenser la dilatation relative.

9. Four à bois selon la revendication 5, **caractérisé en ce que** la surface de cuisson (5) comprend deux composants (5', 5"), dont un premier composant (5') supérieur est réalisé dans un matériau réfractaire à usage alimentaire et dont un deuxième composant (5") inférieur est réalisé dans un matériau réfractaire moulé.

10. Four à bois selon une des revendications précédentes, **caractérisé en ce qu'**il comprend un dispositif (7) destiné à empêcher une dispersion de chaleur au niveau de l'ouverture d'entrée.

11. Four à bois selon la revendication 10, **caractérisé en ce que** ledit dispositif (7) comprend au moins des moyens (8, 9) destinés à créer une circulation forcée de l'air au niveau de l'ouverture d'entrée du four (10).

12. Four à bois selon la revendication 11, **caractérisé en ce que** lesdits moyens (8, 9) comprennent au moins un élément frontal (8) partiellement creux, à l'intérieur duquel se crée un circuit pour l'air, et un ventilateur (9), qui est logé dans la partie supérieure de l'élément frontal (8) et est destiné à aspirer l'air du bas et à le pousser vers une partie creuse (8a) dudit élément frontal (8).

13. Four à bois selon la revendication 12, **caractérisé en ce que** l'élément frontal (8) comprend, au niveau de l'ouverture d'entrée du four (10), une petite paroi (8b) à fentes (8c) et une hotte (8d) creuse de manière à permettre un mouvement d'air constant dans cette zone.

14. Four à bois selon une des revendications précédentes, **caractérisé en ce qu'**il comprend un deuxième dispositif (11) destiné à chasser les vapeurs de cuisson en excès.

15. Four à bois selon la revendication 14, **caractérisé en ce que** le dispositif (11) destiné à chasser les vapeurs de cuisson en excès comprend au moins une vanne (12), une hotte aspirante (8d) et un conduit d'échappement (31) doté d'un évent (13a).

16. Four à bois selon une des revendications précédentes, **caractérisé en ce qu'**il comprend un dispositif (14) destiné à recycler la chaleur produite à l'intérieur de la chambre de combustion (3) et non utilisée pour la cuisson des aliments.

17. Four à bois selon la revendication 16, **caractérisé en ce que** le dispositif (14) de recyclage de la chaleur comprend une entrée (14a) pour l'air ambiant, une sortie (14b) pour l'air chauffé et un chemin (14c) qui est situé entre ladite entrée (14a) et ladite sortie (14b) et qui passe sur la chambre de combustion (3) afin d'en prélever la chaleur.
